# EUROPÄISCHE PATENTSCHRIFT

(11) **EP 3 372 348 B1**
(45) Veröffentlichungstag und Bekanntmachung des Hinweises auf die Patenterteilung: **27.11.2019**
(21) Anmeldenummer: 18160859.7
(22) Anmeldetag: 09.03.2018
(51) Int. Cl.: B25F 5/02

(54) **HANDGEFÜHRTES ARBEITSGERÄT**
MANUALLY OPERATED WORK DEVICE
APPAREIL DE TRAVAIL PORTATIF

(30) Priorität: 11.03.2017 DE 102017002353
(43) Veröffentlichungstag der Anmeldung: 12.09.2018
(73) Patentinhaber: Andreas Stihl AG & Co. KG, 71336 Waiblingen (DE)
(72) Erfinder: Kolb, Joachim, 71638 Ludwigsburg (DE); Failenschmid, Martin, 70329 Stuttgart (DE); Posner, Benedikt, 70561 Stuttgart (DE); Friedrich, Sebastian, 71404 Korb (DE)
(74) Vertreter: Reinhardt, Annette

(56) Entgegenhaltungen:
- EP-A1- 0 599 550
- WO-A1-03/061913
- DE-A1-102012 025 309
- US-B1- 6 548 776

## Beschreibung

Die Erfindung betrifft ein handgeführtes Arbeitsgerät der im Oberbegriff des Anspruchs 1 angegebenen Gattung.

Aus der DE 10 2012 025 309 A1 ist ein handgeführtes Arbeitsgerät mit einem ersten Betätigungselement und einem zweiten Betätigungselement sowie einem Bedienelement zur Ansteuerung des Antriebsmotors bekannt. Um das Bedienelement betätigen zu können, müssen beide Betätigungselemente betätigt sein. Das erste Betätigungselement wirkt auf die Sperreinrichtung. Das zweite Betätigungselement sperrt die Betätigung des ersten Betätigungselements. Dadurch wird verhindert, dass das erste Betätigungselement betätigt werden kann, solange das zweite Betätigungselement nicht gedrückt ist.

Der Erfindung liegt die Aufgabe zugrunde, ein handgeführtes Arbeitsgerät mit vorteilhaftem Aufbau zu schaffen.

Diese Aufgabe wird durch ein handgeführtes Arbeitsgerät mit den Merkmalen des Anspruchs 1 gelöst.

Es hat sich gezeigt, dass es je nach Aufbau des Arbeitsgeräts zu Beschädigungen des ersten Betätigungselements kommen kann, wenn das erste Betätigungselement gewaltsam betätigt wird, beispielsweise, wenn das Arbeitsgerät auf das erste Betätigungselement fällt, so dass das erste Betätigungselement mit hoher Betätigungskraft betätigt wird, während das zweite Betätigungselement nicht gedrückt ist.

Die vorliegende Erfindung sieht nun vor, dass das erste Betätigungselement nicht unmittelbar, sondern über eine Übertragungseinrichtung auf die Sperreinrichtung wirkt und dass das zweite Betätigungselement auf die Übertragungseinrichtung wirkt. Das zweite Betätigungselement wirkt dabei derart auf die Übertragungseinrichtung, dass die Übertragungseinrichtung in betätigter Stellung des zweiten Betätigungselements eine Wirkverbindung zwischen dem ersten Betätigungselement und der Sperreinrichtung herstellt. Dadurch befindet sich die Sperreinrichtung in betätigter Stellung des ersten Betätigungselements in der Freigabestellung und in unbetätigter Stellung des ersten Betätigungselements in der Sperrstellung. In betätigter Stellung des zweiten Betätigungselements kann der Bediener demnach die Sperreinrichtung durch Betätigung des ersten Betätigungselements in ihren Freigabezustand verstellen.

In unbetätigter Stellung des zweiten Betätigungselements ist die Übertragungseinrichtung wirkungslos, und die Sperreinrichtung befindet sich unabhängig von der Stellung des ersten Betätigungselements in der Sperrstellung. Auch in unbetätigter Stellung des zweiten Betätigungselements kann das erste Betätigungselement demnach in die betätigte Stellung verstellt werden. Die Verstellung des ersten Betätigungselements in die betätigte Stellung bewirkt jedoch keine Verstellung der Sperreinrichtung in die Freigabestellung, sondern bleibt wirkungslos.

Dadurch kann auf einfache Weise erreicht werden, dass das erste Betätigungselement und das zweite Betätigungselement unabhängig voneinander, insbesondere in beliebiger Reihenfolge, betätigt werden können. Nur wenn beide Betätigungselemente sich in betätigtem Zustand befinden, befindet sich die Sperreinrichtung in ihrer Freigabestellung, und das Bedienelement ist zur Bedienung des Antriebsmotors freigegeben. Dadurch, dass das Bedienelement vom ersten Betätigungselement mechanisch gesperrt ist, kann das Bedienelement nicht betätigt werden, solange sich nicht sowohl das erste Betätigungselement als auch das zweite Betätigungselement in ihrer betätigten Stellung befinden.

Die Erfindung sieht insbesondere vor, dass die Übertragungseinrichtung einen inaktiven Zustand besitzt, in dem sich die Sperreinrichtung unabhängig von der Stellung des ersten Betätigungselements in der Sperrstellung befindet. Die Übertragungseinrichtung überträgt die Stellbewegung des ersten Betätigungselements demnach nicht derart auf die Sperreinrichtung, dass die Sperreinrichtung ihren Freigabezustand erreichen kann. In unbetätigter Stellung des zweiten Betätigungselements befindet sich die Übertragungseinrichtung in dem inaktiven Zustand. Die Übertragungseinrichtung besitzt außerdem einen aktiven Zustand, in dem sich die Übertragungseinrichtung bei betätigter Stellung des zweiten Betätigungselements befindet. In dem aktiven Zustand stellt die Übertragungseinrichtung eine Wirkverbindung zwischen dem ersten Betätigungselement und der Sperreinrichtung her. Eine Wirkverbindung zwischen dem ersten Betätigungselement und der Sperreinrichtung bedeutet dabei, dass die Sperreinrichtung sich in Sperrstellung befindet, wenn das erste Betätigungselement sich in unbetätigter Stellung befindet, und dass die Sperreinrichtung sich in Freigabestellung befindet, wenn das erste Betätigungselement sich in seiner betätigten Stellung befindet, der Bediener das erste Betätigungselement also betätigt, beispielsweise drückt oder verschiebt. Die Übertragungseinrichtung überträgt die Betätigungsbewegung des ersten Betätigungselements demnach auf die Sperreinrichtung zur Verstellung der Sperreinrichtung zwischen ihrer Sperrstellung und ihrer Freigabestellung.

In vorteilhafter Gestaltung hält das zweite Betätigungselement oder die Übertragungseinrichtung das erste Betätigungselement in seiner betätigten Stellung, wenn sich das zweite Betätigungselement in seiner betätigten Stellung befindet. Dadurch muss der Bediener das erste Betätigungselement nicht dauerhaft betätigt halten, solange das zweite Betätigungselement betätigt ist.

Vorteilhaft hält das Bedienelement in seiner betätigten Stellung das erste Betätigungselement in seiner betätigten Stellung, wenn sich das Bedienelement in seiner betätigten Stellung befindet. Dadurch muss der Bediener das erste Betätigungselement nicht dauernd gedrückt halten, solange das Bedienelement betätigt ist. Es kann jedoch auch vorgesehen sein, dass das erste Betätigungselement in seine unbetätigte Stellung zurückgestellt werden kann oder zurückgestellt wird, während das Bedienelement gedrückt ist, und die Sperreinrichtung erst dann in ihre Sperrstellung zurückgestellt wird, wenn das Bedienelement losgelassen wird.

Ein einfacher Aufbau ergibt sich, wenn das zweite Betätigungselement in unbetätigter Stellung die Sperreinrichtung in ihrer Sperrstellung hält. Dadurch ist bei unbetätigter Stellung des zweiten Betätigungselements sichergestellt, dass das erste Betätigungselement die Sperreinrichtung nicht in ihre Freigabestellung verstellen kann. Das zweite Betätigungselement kann die Sperreinrichtung dabei unmittelbar oder indirekt, beispielsweise über mit dem ersten Betätigungselement gekoppelte Bauteile, in ihrer Sperrstellung halten.

Vorteilhaft ist eine Haltekontur vorgesehen, die das Sperrelement in betätigter Stellung des Bedienelements in Freigabestellung hält. Dadurch wird verhindert, dass die Sperreinrichtung sich bei betätigtem Bedienelement zurück in ihre Sperrstellung verstellt, beispielsweise, wenn das erste und/oder das zweite Betätigungselement losgelassen werden. Dabei kann vorgesehen sein, dass zusätzlich das erste Betätigungselement und/oder das zweite Betätigungselement von dem Bedienelement in seiner betätigten Stellung gehalten werden. Alternativ kann vorgesehen sein, dass sich bei betätigter Stellung des Bedienelements das erste und/oder das zweite Betätigungselement in ihre unbetätigte Stellung zurückstellen können.

Ein einfacher Aufbau ergibt sich, wenn die Sperreinrichtung mindestens ein Sperrelement umfasst, wobei sich das Sperrelement in der Sperrstellung an einer Abstützung abstützt und eine Bewegung des Bedienelements in Bedienrichtung blockiert. Vorteilhaft stützt sich das Sperrelement in der Sperrstellung gegenüber einer Bewegung in Bedienrichtung des Bedienelements ab. Die Abstützung ist bevorzugt gehäusefest angeordnet und bewegt sich bei Betätigungen des ersten Betätigungselements, des zweiten Betätigungselements und des Bedienelements nicht mit. Vorteilhaft wirkt das Sperrelement unmittelbar mit dem Bedienelement zusammen und liegt an einer Sperrkontur oder einem Sperrabschnitt des Bedienelements an. In alternativer Gestaltung ist bevorzugt vorgesehen, dass das Sperrelement mit mindestens einem der Betätigungselemente gekoppelt ist und in unbetätigter Stellung des Betätigungselements in den Schwenkweg des Bedienelements ragt und sich in betätigter Stellung des Betätigungselements außerhalb des Schwenkwegs des Bedienelements befindet.

In einer vorteilhaften Ausführungsvariante umfasst die Übertragungseinrichtung ein Schwenkgelenk, und das zweite Betätigungselement verändert die Lage des Schwenkgelenks, also die Lage der Schwenkachse des Schwenkgelenks. Das erste Betätigungselement bewirkt vorteilhaft nur in einer Lage des Schwenkgelenks eine Verstellung der Sperreinrichtung in die Freigabestellung. In einer Lage des Schwenkgelenks bei unbetätigter Stellung des zweiten Betätigungselements bleibt eine Verstellung des ersten Betätigungselements in die betätigte Stellung vorteilhaft wirkungslos, und die Sperreinrichtung bleibt in ihrer Sperrstellung. Dabei kann sich die Lage eines Sperrelements der Sperreinrichtung bei der Betätigung des ersten Betätigungselementes ändern oder unverändert bleiben.

Ein einfacher Aufbau wird erreicht, wenn das Schwenkgelenk in einer Führung geführt ist, deren Lage vom zweiten Betätigungselement verstellt wird. In einer alternativen Ausführungsvariante ist vorteilhaft vorgesehen, dass die Übertragungseinrichtung ein elastisches Element umfasst und eine Bewegung des ersten Betätigungselements in Bedienrichtung eine Verformung des elastischen Elements bewirkt, wenn sich die Sperreinrichtung in Sperrstellung und das zweite Betätigungselement in unbetätigter Stellung befinden. Die Betätigungsbewegung des ersten Betätigungselements wird demnach mindestens teilweise durch die Elastizität des elastischen Elements aufgenommen, so dass die Betätigungsbewegung des ersten Betätigungselements nicht auf die Sperreinrichtung wirkt und eine Verstellung der Sperreinrichtung in die Freigabestellung zur Folge hat. Dadurch bleibt in unbetätigter Stellung des zweiten Betätigungselements eine Betätigung des ersten Betätigungselements wirkungslos. Die Wirkverbindung zwischen dem ersten Betätigungselement und der Sperreinrichtung ist somit unterbrochen. Das elastische Element kann in vorteilhafter Gestaltung auch durch geeignete elastische Gestaltung des ersten Betätigungselements selbst gebildet sein. Vorteilhaft hält das zweite Betätigungselement ein Sperrelement der Sperreinrichtung in der Sperrstellung.

In alternativer vorteilhafter Ausführungsvariante besitzt die Sperreinrichtung eine Sperrkontur, die in der Sperrstellung mit einem Element der Übertragungseinrichtung in Kontakt ist. Das zweite Betätigungselement bringt in betätigter Stellung das Element der Übertragungseinrichtung vorteilhaft bei einer Betätigung des ersten Betätigungselements außer Kontakt mit der Sperrkontur. Das Außerkontaktbringen des Elements der Übertragungseinrichtung und der Sperrkontur entspricht einer Verstellung der Sperreinrichtung in die Freigabestellung. Bei unbetätigtem zweitem Betätigungselement ist das erste Betätigungselement wirkungslos, und das Element der Übertragungseinrichtung ist in jeder Position des ersten Betätigungselements mit der Sperrkontur in Kontakt, so dass sich die Sperreinrichtung unabhängig von der Position des ersten Betätigungselements in der Sperrstellung befindet. In betätigter Stellung des zweiten Betätigungselements bringt das zweite Betätigungselement das Element der Übertragungseinrichtung außer Kontakt mit der Sperrkontur, so dass sich die Sperreinrichtung in Abhängigkeit der Stellung des ersten Betätigungselements in ihrer Sperrstellung oder ihrer Freigabestellung befindet. Dadurch ist die Übertragungseinrichtung aktiv und stellt eine Wirkverbindung zwischen dem ersten Betätigungselement und der Sperreinrichtung her. Vorteilhaft ist die Sperrkontur fest mit dem Bedienelement verbunden, und das zweite Betätigungselement lenkt das Element der Übertragungseinrichtung über eine Rampe aus dem Bewegungsbereich der Sperrkontur aus. Dadurch ergibt sich ein einfacher, kompakter Aufbau. Die Übertragungseinrichtung wird dabei von dem Element der Übertragungseinrichtung und der Rampe gebildet.

In alternativer vorteilhafter Ausgestaltung besitzt die Übertragungseinrichtung einen Zwischenhebel, auf den das erste Betätigungselement wirkt. Das erste Betätigungselement kann in unbetätigter Stellung des zweiten Betätigungselements bei dieser Ausführung gegenüber dem Zwischenhebel frei verschwenken. In betätigter Stellung des zweiten Betätigungselements bewirkt eine Verschwenkbewegung des ersten Betätigungselements dagegen eine Verschwenkbewegung des Zwischenhebels. Der Zwischenhebel kann dadurch zwischen einer inaktiven Position, in der das erste Betätigungselement frei verschwenken kann, und einer aktiven Position, in der eine Verschwenkbewegung des ersten Betätigungselements eine Verschwenkbewegung des Zwischenhebels und dadurch eine Verstellung der Sperreinrichtung zwischen der Freigabestellung und der Sperrstellung bewirkt, verstellt werden. Das zweite Betätigungselement bewirkt dadurch eine Verstellung des Zwischenhebels der Übertragungseinrichtung zwischen einer aktiven Stellung, in der das erste Betätigungselement mit der Sperreinrichtung wirkverbunden ist, und einer inaktiven Stellung, in der keine Wirkverbindung zwischen dem ersten Betätigungselements und der Sperreinrichtung besteht. Eine einfache Gestaltung ergibt sich, wenn die Sperreinrichtung mindestens ein an dem Zwischenhebel ausgebildetes Sperrelement besitzt, das beim Verschwenken des Zwischenhebels aus dem Schwenkbereich des Bedienelements geschwenkt wird. Der Zwischenhebel kann dabei in vorteilhafter Gestaltung über das Bedienelement in der der Freigabestellung der Sperreinrichtung zugeordneten Position gehalten werden.

In alternativer vorteilhafter Gestaltung umfasst die Übertragungseinrichtung einen Hebel, auf den das erste Betätigungselement und das zweite Betätigungselement wirken. Es ist vorgesehen, dass der Hebel derart gelenkig gelagert ist, dass die Übertragungseinrichtung nur dann auf die Sperreinrichtung wirkt, wenn das erste Betätigungselement und das zweite Betätigungselement betätigt sind. In bevorzugter Gestaltung ist der Hebel nach Art einer Wippe mittig über ein Schwenkgelenk mit dem Sperrelement verbunden, und jedes der Betätigungselemente wirkt auf ein Ende des Hebels. Nur wenn beide Betätigungselemente betätigt sind, ist das Sperrelement so weit ausgelenkt, dass sich die Sperreinrichtung in ihrer Freigabestellung befindet.

In vorteilhafter alternativer Gestaltung ist die Übertragungseinrichtung eine hydraulische oder pneumatische Übertragungseinrichtung, und das zweite Betätigungselement unterbricht in unbetätigter Stellung eine hydraulische oder pneumatische Verbindung zwischen dem ersten Betätigungselement und der Sperreinrichtung. Durch die Unterbrechung der hydraulischen oder pneumatischen Verbindung ist die Übertragungseinrichtung inaktiv und eine Verstellung des ersten Betätigungselements zwischen seiner betätigten und seiner unbetätigten Stellung bewirkt keine Verstellung der Sperreinrichtung zwischen ihrer Sperrstellung und ihrer Freigabestellung. In betätigter Stellung des zweiten Betätigungselements besteht die hydraulische oder pneumatische Verbindung zwischen dem ersten Betätigungselement und der Sperreinrichtung. Eine Verstellung des ersten Betätigungselements zwischen seiner unbetätigten und seiner betätigten Stellung bewirkt dann eine Verstellung der Sperreinrichtung zwischen ihrer Sperrstellung und ihrer Freigabestellung.

Ausführungsbeispiele der Erfindung werden im Folgenden anhand der Zeichnung erläutert. Es zeigen:
- Fig. 1: eine Seitenansicht eines handgeführten Arbeitsgeräts,
- Fig. 2 bis Fig. 6: schematische Darstellungen eines ersten Ausführungsbeispiels in unterschiedlichen Stellungen der Betätigungselemente und des Bedienelements,
- Fig. 7 und Fig. 8: schematische Schnittdarstellungen eines weiteren Ausführungsbeispiels in unterschiedlichen Stellungen der Betätigungselemente und des Bedienelements,
- Fig. 9 bis Fig. 13: schematische Darstellungen eines weiteren Ausführungsbeispiels in unterschiedlichen Stellungen der Betätigungselemente und des Bedienelements,
- Fig. 14: eine schematische Darstellung eines weiteren Ausführungsbeispiels mit unbetätigten Betätigungselementen und unbetätigtem Bedienelement,
- Fig. 15: eine schematische Schnittdarstellung entlang der Linie XV-XV in Fig. 14,
- Fig. 16: eine schematische Darstellung des Ausführungsbeispiels aus Fig. 14 mit betätigtem erstem Betätigungselement und unbetätigtem zweitem Betätigungselement und Bedienelement,
- Fig. 17: eine schematische Schnittdarstellung entlang der Linie XVII-XVII in Fig. 16,
- Fig. 18: eine schematische Darstellung des Ausführungsbeispiels aus den Fig. 14 und 16 mit betätigtem zweitem Betätigungselement,
- Fig. 19: eine schematische Schnittdarstellung entlang der Linie XIX-XIX in Fig. 18,
- Fig. 20: eine schematische Darstellung der Anordnung aus Fig. 14 mit betätigtem erstem und betätigtem zweitem Betätigungselement,
- Fig. 21: eine schematische Schnittdarstellung entlang der Linie XXI-XXI in Fig. 20,
- Fig. 22: eine schematische Darstellung des Ausführungsbeispiels aus Fig. 14 mit betätigtem erstem und zweitem Betätigungselement und betätigtem Bedienelement,
- Fig. 23: eine schematische Schnittdarstellung entlang der Linie XXIII-XXIII aus Fig. 22,
- Fig. 24 bis Fig. 27: schematische Darstellungen eines weiteren Ausführungsbeispiels in unterschiedlichen Stellungen der Betätigungselemente und des Bedienelements,
- Fig. 28 bis Fig. 31: schematische Darstellungen eines weiteren Ausführungsbeispiels in unterschiedlichen Stellungen der Betätigungselemente und des Bedienelements,
- Fig. 32: eine schematische Darstellung eines weiteren Ausführungsbeispiels,
- Fig. 33: eine schematische Darstellung eines weiteren Ausführungsbeispiel mit unbetätigten Betätigungselementen und unbetätigtem Bedienelement,
- Fig. 34: eine schematische Darstellung des Ausführungsbeispiels aus Fig. 33 mit betätigten Betätigungselementen und betätigtem Bedienelement.

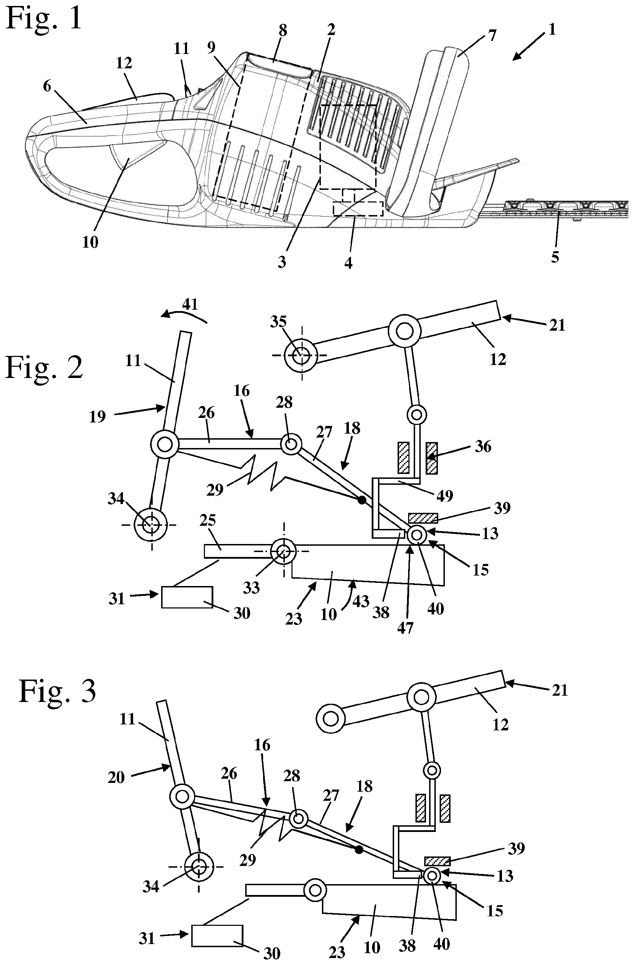

Fig. 1 zeigt als Ausführungsbeispiel für ein handgeführtes Arbeitsgerät 1 eine Heckenschere. Die vorliegende Erfindung kann auch für andere handgeführte, insbesondere handgetragene Arbeitsgeräte 1 vorteilhaft sein. Das Arbeitsgerät 1 besitzt ein Gehäuse 2, in dem ein Antriebsmotor 3 angeordnet ist. Im Ausführungsbeispiel ist der Antriebsmotor 3 als Elektromotor ausgebildet und wird über einen Akku 8, der in einem Akkuschacht 9 angeordnet ist, mit Energie versorgt. Anstatt des Akkus 8 kann auch eine Batterie oder eine elektrische Anschlussleitung zur Energieversorgung des Antriebsmotors 3 vorgesehen sein. Es kann auch vorgesehen sein, dass der Antriebsmotor 3 ein Verbrennungsmotor ist. Als Werkzeug besitzt das Arbeitsgerät 1 eine Messeranordnung 5 mit nicht im Einzelnen gezeigten Messerbalken, die vom Antriebsmotor 3 über ein Getriebe 4 hin und her gehend angetrieben ist. Das Arbeitsgerät 1 besitzt einen hinteren Handgriff 6 sowie einen Griffbügel 7 zum Führen des Arbeitsgeräts 1 im Betrieb. Ein erstes Betätigungselement 11 ist im Ausführungsbeispiel am Gehäuse 2 unmittelbar benachbart zum hinteren Handgriff 6 vorgesehen. Im Ausführungsbeispiel sind am hinteren Handgriff 6 ein Bedienelement 10 sowie ein zweites Betätigungselement 12 gelagert. Auch eine andere Anordnung der Betätigungselemente 11 und 12 kann vorteilhaft sein.

Um den Antriebsmotor 3 in Betrieb zu nehmen, muss das Bedienelement 10 betätigt werden. Das Bedienelement 10 kann nur dann betätigt werden, wenn sowohl das erste Betätigungselement 11 als auch das zweite Betätigungselement 12 betätigt sind bzw. in einer betätigten Stellung gehalten werden. Eine Betätigung der Betätigungselemente 11 und 12 und des Bedienelements 10 bedeutet vorliegend immer eine Betätigung, insbesondere ein Drücken bzw. Verschwenken, durch einen Bediener. Die Betätigungselemente 11 und 12 und das Bedienelement 10 ragen hierzu aus dem Gehäuse 2, so dass sie von einem Bediener gegriffen werden können. In den folgenden Ausführungsbeispielen sind die Betätigungselemente 11 und 12 und das Bedienelement 10 als Schwenkhebel ausgebildet. Auch eine andere Gestaltung, beispielsweise als Bedienknopf oder translatorisch zu bewegender Schieber, kann jedoch vorteilhaft sein.

Wie Fig. 2 zeigt, ist das Bedienelement 10 im ersten Ausführungsbeispiel um eine Schwenkachse 33 schwenkbar gelagert. Das Bedienelement 10 besitzt einen Betätigungsabschnitt 25, der auf einen Schalter 30 wirkt. Der Schalter 30 kann ein Ein-/Ausschalter oder ein Potenziometer sein. In Fig. 2 ist das Bedienelement 10 in seiner unbetätigten Stellung 23 gezeigt und der Schalter 30 in seinem unbetätigten Zustand 31. In unbetätigtem Zustand 31 des Schalters 30 ist der Antriebsmotor 3 nicht in Betrieb. Das Bedienelement 10 kann in dem in Fig. 2 gezeigten Zustand nicht betätigt werden, da ein Sperrelement 40 im Schwenkweg des Bedienelements 10 angeordnet ist. Das Sperrelement 40 ist Teil einer Sperreinrichtung 13. Das Sperrelement 40 stützt sich an einer Abstützung 39 ab, die im Ausführungsbeispiel gehäusefest angeordnet ist. Das Bedienelement 10 besitzt eine Sperrkontur 47, die mit dem Sperrelement 40 zusammenwirkt und dieses gegen die Abstützung 39 drückt, wenn das Bedienelement 10 in einer Bedienrichtung 43 gedrückt wird. Dadurch ist eine Betätigung des Bedienelements 10 mechanisch gesperrt. In Fig. 2 befindet sich die Sperreinrichtung 13 in ihrer Sperrstellung 15, in der keine Betätigung des Bedienelements 10 möglich ist.

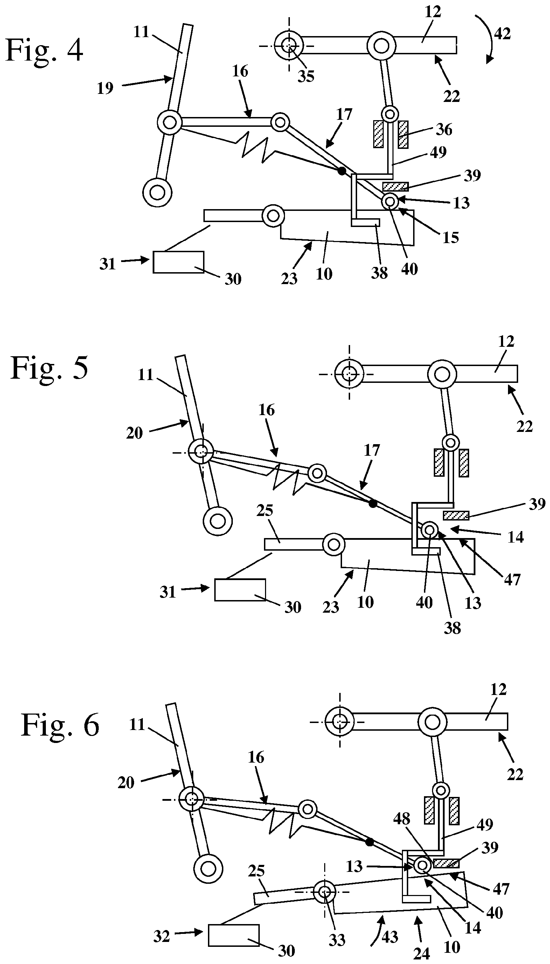

Das Sperrelement 40 ist über eine Übertragungseinrichtung 16 mit dem ersten Betätigungselement 11 verbunden. Das Betätigungselement 11 ist um eine Schwenkachse 34 schwenkbar gelagert und befindet sich in Fig. 2 in seiner unbetätigten Stellung 19. Die Übertragungseinrichtung 16 ist im Ausführungsbeispiel durch zwei Hebel 26 und 27 gebildet, die an einem Schwenkgelenk 28 schwenkbar miteinander verbunden sind. Die Darstellung ist dabei lediglich schematisch und zeigt die Funktion, nicht jedoch die konstruktive Gestaltung. Der Hebel 26 ist mit einem Ende mit dem ersten Betätigungselement 11 und mit dem anderen Ende mit dem Schwenkgelenk 28 verbunden. Der zweite Hebel 27 ist mit einem Ende mit dem Schwenkgelenk 28 verbunden und trägt am anderen Ende das Sperrelement 40. Auch eine andere Gestaltung kann jedoch vorteilhaft sein. Der zweite Hebel 27 ist über ein elastisches Element, nämlich eine Feder 29 vorgespannt. Die Übertragungseinrichtung 16 befindet sich in ihrem inaktiven Zustand 18. In diesem Zustand ist das Sperrelement 40 an einem Haltebereich 38 eines Führungselements 49 angeordnet. Der Haltebereich 38 versperrt den Weg des Sperrelements 40 in eine Freigabestellung 14 (Fig. 5) der Sperreinrichtung 13. Die Feder 29 spannt den Hebel 27 in Richtung auf seine Freigabestellung 14, im Ausführungsbeispiel gegen den Haltebereich 38, vor. Das Führungselement 49 ist in einer Führung 36 gegenüber dem Gehäuse 2 verschiebbar gelagert. Das Führungselement 49 ist mit dem zweiten Betätigungselement 12 verbunden. Das zweite Betätigungselement 12 befindet sich in einer unbetätigten Stellung 21. Das zweite Betätigungselement 12 ist um eine Schwenkachse 35 schwenkbar gelagert.

Das erste Betätigungselement 11 kann vom Bediener in einer Bedienrichtung 41 betätigt und dadurch um die Schwenkachse 34 verschwenkt werden. Fig. 3 zeigt die Anordnung nach einer Verschwenkung des ersten Betätigungselements 11 in seine betätigte Stellung 20. Die Verstellung des ersten Betätigungselements 11 in die betätigte Stellung 20 hat durch einen Bediener zu erfolgen. Wie Fig. 3 zeigt, befindet sich die Sperreinrichtung 13 weiterhin in ihrer Sperrstellung 15. Das Verschwenken des ersten Betätigungselements 11 hat lediglich eine Veränderung der Übertragungseinrichtung 16 bewirkt. Die Hebel 26 und 27 wurden um das Schwenkgelenk 28 zueinander verschwenkt, wodurch die Feder 29 gespannt wurde. Das Sperrelement 40 hat sich dagegen nicht bewegt, sondern wird vom Haltebereich 38 weiterhin in der Sperrstellung 15 gehalten. Der Haltebereich 38 bewirkt demnach, dass die Übertragungseinrichtung 16 inaktiv ist und eine Betätigung des ersten Betätigungselements 11 keine Verstellung der Sperreinrichtung 13 in ihre Freigabestellung 14 bewirkt. Das zweite Betätigungselement 12 hält die Sperreinrichtung 13 in ihrer Sperrstellung 15.

Fig. 4 zeigt die Anordnung mit dem ersten Betätigungselement 11 in seiner unbetätigten Stellung 19. Das zweite Betätigungselement 12 wurde in Bedienrichtung 42 in seine betätigte Stellung 22 verschwenkt. Die Verschwenkung des zweiten Betätigungselements 12 um seine Schwenkachse 35 hat eine Bewegung des Führungselements 49 in der Führung 36 bewirkt. Dadurch hat sich der Haltebereich 38 vom Sperrelement 40 weg in eine Position bewegt, in der der Haltebereich 38 die Bewegung des Sperrelements 40 nicht sperrt. Im Ausführungsbeispiel bewegt sich der Haltebereich 38 quer zur Bewegungsrichtung des Sperrelements 40. In der in Fig. 4 gezeigten Stellung kann sich das Sperrelement 40 aus dem Bereich der Abstützung 39 bewegen. Die Übertragungseinrichtung 16 befindet sich dadurch in Fig. 4 in einem aktiven Zustand 17, in dem eine Betätigung des ersten Betätigungselements 11 eine Bewegung des Sperrelements 40 und eine Verstellung der Sperreinrichtung 13 zwischen ihrer Sperrstellung 15 und ihrer Freigabestellung 15 bewirkt. Das erste Betätigungselement 11 befindet sich in Fig. 4 in seiner unbetätigten Stellung 19 und die Sperreinrichtung 13 in ihrer Sperrstellung 15.

Wird ausgehend von der in Fig. 4 gezeigten Stellung das erste Betätigungselement 11 in seine in Fig. 5 gezeigte, betätigte Stellung 20 verschwenkt, so wirkt die Übertragungseinrichtung 16 auf das Sperrelement 40 und bewegt das Sperrelement 40 aus dem Bereich der Abstützung 39. In Fig. 5 ist das erste Betätigungselement 11 in seiner betätigten Stellung 20 und das zweite Betätigungselement 12 in seiner betätigten Stellung 22. Die Sperreinrichtung 13 befindet sich in ihrer Freigabestellung 14, und das Bedienelement 10 kann verschwenkt werden.

Fig. 6 zeigt die Anordnung, nachdem das Bedienelement 10 in der Bedienrichtung 43 in seine betätigte Stellung 24 verschwenkt wurde. Das Sperrelement 40 liegt in dieser Position an einer Haltekontur 48 der Abstützung 39 an. Das Sperrelement 40 ist dabei im Ausführungsbeispiel zwischen dem Führungselement 49, der Haltekontur 48 und der Sperrkontur 47 des Bedienelements 10 gehalten. Die Haltekontur 48 bewirkt, dass das Sperrelement 40 sich nicht zurück zwischen die Sperrkontur 47 und die Abstützung 39 bewegen kann. Die Haltekontur 48 hält die Sperreinrichtung 13 dadurch in ihrer Freigabestellung 14. Aufgrund der Verschwenkung des Bedienelements 10 in seine betätigte Stellung 24 hat sich der Betätigungsabschnitt 25 des Bedienelements 10 gegenüber dem Schalter 30 bewegt und den Schalter 30 betätigt. Der Schalter 30 befindet sich nun in seinem betätigten Zustand 32, in der der Antriebsmotor 3 in Betrieb ist.

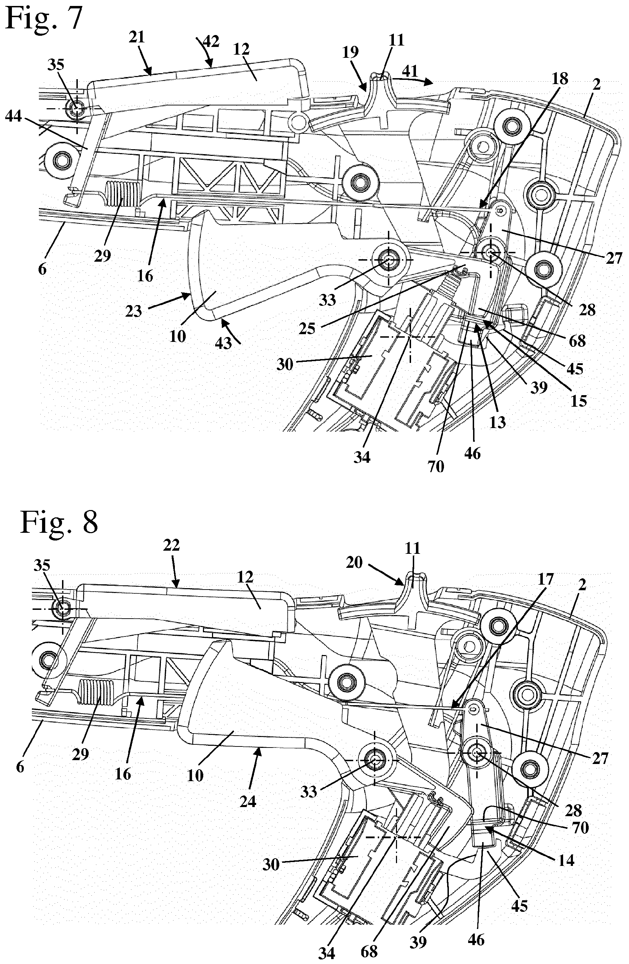

Fig. 7 und Fig. 8 zeigen eine mögliche konstruktive Ausführung, die auf dem in den Fig. 2 bis 6 gezeigten Wirkprinzip beruht. Gleiche Bezugszeichen kennzeichnen dabei in allen Figuren einander entsprechende Elemente und Elemente mit gleicher oder ähnlicher Funktion. Das erste Betätigungselement 11 ist um eine Schwenkachse 34 schwenkbar gelagert. Das erste Betätigungselement 11 ist in Fig. 7 in unbetätigter Stellung 19 dargestellt. Das zweite Betätigungselement 12 ist um eine Schwenkachse 35 schwenkbar gelagert und ebenfalls in unbetätigter Stellung 21 dargestellt. Auch das Bedienelement 10 befindet sich in unbetätigter Stellung 23. Das zweite Betätigungselement 12 besitzt einen Arm 44, der fest mit dem aus dem Gehäuse ragenden Abschnitt verbunden ist und an dem eine Feder 29 eingehängt ist. Die Feder 29 koppelt den Arm 44 mit einem Hebel 27, der an einem Schwenkgelenk 28 schwenkbar gelagert ist. Im Unterschied zu der Gestaltung nach den Fig. 2 bis 6 ist das Schwenkgelenk 28 in der Gestaltung nach Fig. 7 nicht zwischen dem Hebel 27 und einem weiteren Hebel vorgesehen, sondern zwischen dem Hebel 27 und dem Gehäuse 2. Die Feder 29 bildet mit dem Hebel 27 die Übertragungseinrichtung 16, die sich in der Darstellung in Fig. 7 in ihrem inaktiven Zustand 18 befindet. Der Hebel 27 besitzt einen Haltefortsatz 46. Am ersten Betätigungselement 11 ist eine Abstützung 39 ausgebildet, die in der unbetätigten Stellung 19 des ersten Betätigungselements 11 im Schwenkweg des Hebels 27 liegt. Dadurch ist der Hebel 27 gesperrt.

Wird das zweite Betätigungselement 12 bei unbetätigter Stellung 19 des ersten Betätigungselements 11 in der Bedienrichtung 42 betätigt und in die in Fig. 8 gezeigte betätigte Stellung 20 verschwenkt, so wird die Feder 29 gelängt. Der Hebel 27 ist durch die Abstützung 39 am Verschwenken gehindert. Der Hebel 27 ist Teil einer Sperreinrichtung 13, die ein Sperrelement 70 am Hebel 27 und einen Sperrabschnitt 68 am Bedienelement 10 umfasst. Der Sperrabschnitt 70 befindet sich in Sperrstellung 15 der Sperreinrichtung 13 im Schwenkweg des Sperrabschnitts 68, so dass das Bedienelement 10 nicht in Bedienrichtung 43 verschwenkt werden kann.

Wird das erste Betätigungselement 11 in Bedienrichtung 41 in die in Fig. 8 dargestellte betätigte Stellung 20 verschwenkt, so schwenkt die Abstützung 39 aus dem Schwenkweg des Hebels 27. Wird das zweite Betätigungselement 12 in Bedienrichtung 42 betätigt und in seine in Fig. 8 gezeigte betätigte Stellung 22 verstellt, so verschwenkt der Hebel 27 aufgrund der Vorspannung durch die Feder 29 um seine Schwenkachse 28, und das Sperrelement 70 gelangt aus dem Schwenkbereich des Bedienelements 10. Das Bedienelement 10 kann dann in Bedienrichtung 43 (Fig. 7) in seine betätigte Stellung 24 (Fig. 8) verschwenkt werden.

Am ersten Bedienelement 11 ist eine Haltekontur 45 ausgebildet, an der der Hebel 27 in betätigter Stellung anliegt. In dieser Stellung des Hebels 27 befindet sich die Sperreinrichtung 13 in ihrer Freigabestellung 14. Die Haltekontur 45 liegt im Schwenkweg des ersten Betätigungselements 11 und hält das erste Betätigungselement 11 in seiner betätigten Stellung 20, solange sich das zweite Betätigungselement 12 in seiner betätigten Stellung 22 befindet. Wenn sich die Sperreinrichtung 13 in ihrer Freigabestellung 14 befindet, wird das erste Betätigungselement 11 demnach in seiner betätigten Stellung 20 gehalten. Dadurch kann der Bediener das erste Betätigungselement 11 loslassen, nachdem sich beide Betätigungselemente 11 und 12 in der betätigten Stellung 20 bzw. 22 befunden haben.

Wie Fig. 8 auch zeigt, liegt in betätigter Stellung 24 des Bedienelements 10 der Sperrabschnitt 68 im Schwenkweg des Hebels 27. Der Sperrabschnitt 68 des Bedienelements 10 hält dadurch die Übertragungseinrichtung 16 in ihrem aktiven Zustand 17 und verhindert, dass der Hebel 27 beim Loslassen des zweiten Betätigungselements 12 in die in Fig. 7 gezeigte Stellung zurückschwenken kann.

Aufgrund der Feder 29 ist die Bedienreihenfolge der Betätigungselemente 11 und 12 nicht vorgegeben, sondern kann vom Bediener gewählt werden. Es ist möglich, das zweite Betätigungselement 12 zuerst zu drücken und damit die Feder 29 zu spannen. Wird dann das erste Betätigungselement 11 in die betätigte Stellung 20 verstellt, so schwenkt der Hebel 27 aufgrund der Kraft der Feder 29 in seine betätigte Stellung. Auch eine Betätigung des ersten Betätigungselements 11 und eine darauffolgende Betätigung des zweiten Betätigungselements 12 ist möglich.

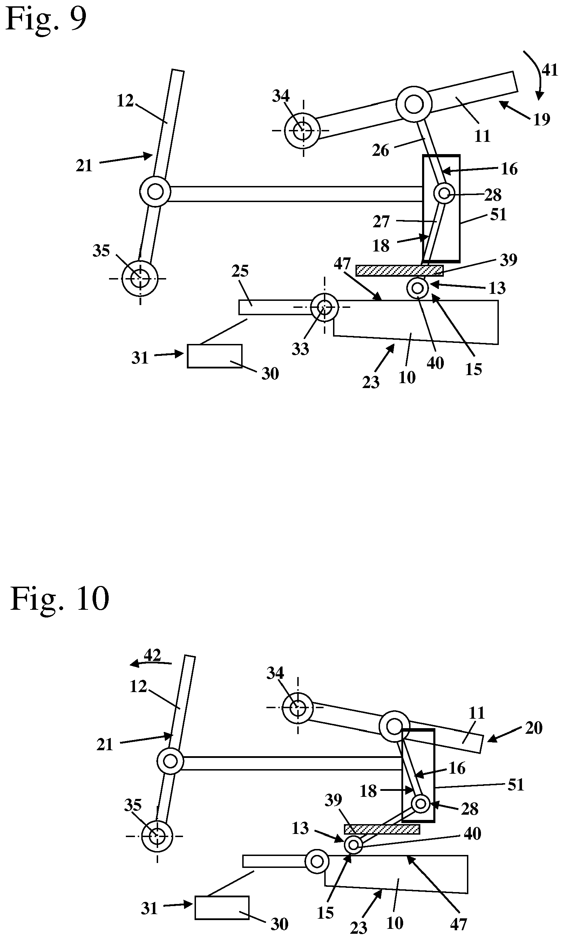

Die Fig. 9 bis 13 zeigen ein weiteres Ausführungsbeispiel. Wie Fig. 9 zeigt, wirkt das erste Betätigungselement 11 über eine Übertragungseinrichtung 16 auf ein Sperrelement 40. Die Übertragungseinrichtung 16 umfasst zwei Hebel 26 und 27, die über ein Schwenkgelenk 28 schwenkbar miteinander verbunden sind. Bei der Ausführung nach Fig. 9 ist jedoch keine Feder vorgesehen, die einen der Hebel vorspannt. Stattdessen ist das Schwenkgelenk 28 in einer Führung 51 geführt. Die Position der Führung 51 ist an die Stellung des zweiten Betätigungselements 12 gekoppelt. Durch Betätigen des zweiten Betätigungselements 12 wird die Position des Schwenkgelenks 28 verändert. Fig. 9 zeigt die Anordnung mit dem ersten Betätigungselement 11 in unbetätigter Stellung 19, dem zweiten Betätigungselement 12 in seiner unbetätigten Stellung 21 sowie dem Bedienelement 10 in seiner unbetätigten Stellung 23. Die Sperreinrichtung 13 befindet sich in Sperrstellung 15. Das Sperrelement 40 ist zwischen einer Sperrkontur 47 am Bedienelement 10 und der Abstützung 39 angeordnet und verhindert mechanisch eine Betätigung des Bedienelements 10. Die Übertragungseinrichtung 16 ist durch die Hebel 26 und 27 und das Schwenkgelenk 28 gebildet und befindet sich in inaktivem Zustand 18.

Wird das erste Betätigungselement 11 in Bedienrichtung 41 in seine betätigte Stellung 20 verstellt, die in Fig. 10 gezeigt ist, so bewirkt dies eine Bewegung des Schwenkgelenks 28 innerhalb der Führung 51. Die Führung 51 und die Abstützung 39 sind so aufeinander abgestimmt, dass sich das Sperrelement 40 weiterhin zwischen der Sperrkontur 47 und der Abstützung 39 befindet und sich die Sperreinrichtung 13 in ihrer Sperrstellung 15 befindet. Bei unbetätigtem Betätigungselement 12 kann das erste Betätigungselement 11 demnach zwischen seiner unbetätigten Stellung 19 und seiner betätigten Stellung 20 verschwenkt werden, ohne dass dies eine Verstellung der Sperreinrichtung 13 zwischen ihrer Sperrstellung 15 und der Freigabestellung 14 bewirkt. Die Übertragungseinrichtung 16 ist inaktiv.

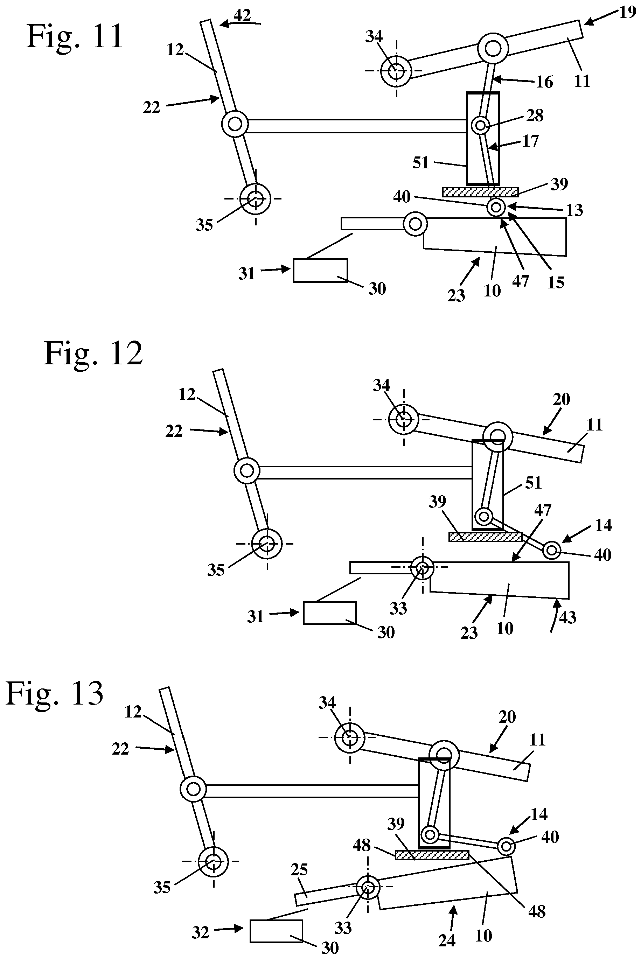

Fig. 11 zeigt die Anordnung mit dem ersten Betätigungselement 11 in seiner unbetätigten Stellung 19. Das zweite Betätigungselement 12 wurde gegenüber der Anordnung aus Fig. 9 in Bedienrichtung 42 verschwenkt und befindet sich nun in seiner betätigten Stellung 22. Dadurch wurde die Führung 51 verschoben. Die Übertragungseinrichtung 26 befindet sich in ihrem aktiven Zustand. Das Sperrelement 40 ist zwischen der Sperrkontur 47 und der Abstützung 39 angeordnet, und die Sperreinrichtung 13 befindet sich in ihrer Sperrstellung 15. Wird das erste Betätigungselement 11 aus der in Fig. 11 gezeigten Position in seine betätigte Stellung 22 (Fig. 12) verschwenkt, so gelangt das Sperrelement 40 aus dem Bereich der Abstützung 39, und das Bedienelement 10 kann betätigt werden. In Fig. 12 befindet sich das Bedienelement 10 noch in unbetätigter Stellung 23. Wird das Bedienelement 10 in Bedienrichtung 43 betätigt, so gelangt das Bedienelement 10 in die in Fig. 13 gezeigte betätigte Stellung 24. Der Betätigungsabschnitt 25 wirkt in dieser Stellung auf den Schalter 30 und verstellt den Schalter 30 aus seinem unbetätigten Zustand (Fig. 12) in seinen betätigten Zustand 32 (Fig. 13).

Auch bei dem Ausführungsbeispiel nach den Fig. 9 bis 13 ist eine alternative Bedienreihenfolge möglich. Wird aus der Anordnung, die in Fig. 10 gezeigt ist, also bei betätigter Stellung 20 des ersten Betätigungselements 11, das zweite Betätigungselement 12 in Bedienrichtung 42 in seine betätigte Stellung 22 verstellt, so wird die Führung 51 in der Darstellung in Fig. 10 nach links verschoben. Dadurch, dass sich das Schwenkgelenk 28 in einem Endbereich der Führung 51 befindet, wird das Stellelement 40 bei Verschiebung der Führung 51 nach links ebenfalls nach links bewegt. Dadurch kommt das Sperrelement 40 aus dem Bereich der Abstützung 39, und die Sperreinrichtung 13 wird in ihren Freigabezustand 14 verstellt.

Auch beim Ausführungsbeispiel nach den Fig. 9 bis 13 wird das Sperrelement 40 von einer Haltekontur 48 in der Freigabestellung 14 gehalten, wenn das erste Betätigungselement 11 und/oder das zweite Betätigungselement 12 in seine unbetätigte Stellung 19 bzw. 21 zurückgestellt wird. Im Ausführungsbeispiel sind zwei Haltekonturen 48 an den Stirnseiten der Abstützung 39 vorgesehen. Je nach Bedienreihenfolge der Betätigungselemente 11, 12 ist eine der Haltekonturen 48 aktiv.

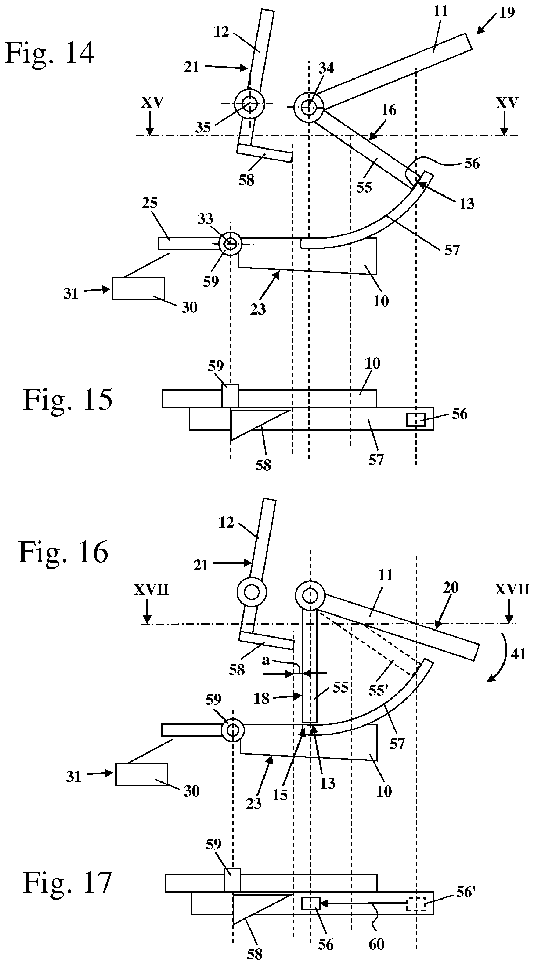

Die Fig. 14 bis 23 zeigen eine alternative Ausführung. Das Bedienelement 10 ist an einem Lager 59 um die Schwenkachse 33 schwenkbar gelagert. Es ist eine fest mit dem Bedienelement 10 verbundene Sperrkontur 57 vorgesehen, die im Ausführungsbeispiel in unbetätigter Stellung 23 des Bedienelements 10 bogenförmig um die Schwenkachse 34 des ersten Betätigungselements 11 verläuft. Am ersten Betätigungselement 11 ist ein Arm 55 ausgebildet, der Teil einer Übertragungseinrichtung 16 ist. Der Arm 55 ist elastisch. Dies kann beispielsweise durch Eigenelastizität des Materials des Arms 55, beispielsweise Kunststoff, realisiert werden. Der Arm 55 besitzt im Ausführungsbeispiel an seinem freien Ende ein Sperrelement 56, das unmittelbar benachbart zur Sperrkontur 57 liegt oder an dieser anliegt. In der gezeigten unbetätigten Stellung 19 des ersten Betätigungselements 11 sperrt das Sperrelement 56 am Arm 55 eine Betätigung des Bedienelements 10. Das Sperrelement 56 bildet mit der Sperrkontur 57 eine Sperreinrichtung 13. Das zweite Betätigungselement 12, das in Fig. 14 ebenfalls in unbetätigter Stellung 21 gezeigt ist, ist um die Schwenkachse 35 schwenkbar gelagert und mit einem Auslenkelement, im Ausführungsbeispiel einer Rampe 58, verbunden. Das Auslenkelement ist ebenfalls Teil der Übertragungseinrichtung 16.

Wie Fig. 15 zeigt, befindet sich die Rampe 58 in einer Ebene mit dem Sperrelement 56 und der Sperrkontur 57. Die Rampe 58 ist im Ausführungsbeispiel auch in einer Ebene mit dem Arm 55 angeordnet.

Die Fig. 16 und 17 zeigen die Anordnung bei einer Betätigung des ersten Betätigungselements 11 in Bedienrichtung 41. Bei einer solchen Betätigung bewegt sich der Arm 55 von der in Fig. 16 mit gestrichelter Linie gezeigten Position 55' zu der mit durchgezogener Linie gezeichneten Position des Arms 55. Dabei bewegt sich das Sperrelement 56, wie Fig. 17 zeigt, von einer mit gestrichelter Linie gezeigten Position 56' zu der mit durchgezogener Linie gezeigten Position des Sperrelements 56 in Richtung eines Pfeils 60. Auch in der betätigten Stellung 20 des ersten Betätigungselements 11 befindet sich das Sperrelement 56 unmittelbar benachbart zur Sperrkontur 57 und verhindert eine Betätigung des Bedienelements 10. Die Übertragungseinrichtung 16, die durch den Arm 55 und die Rampe 58 gebildet ist, befindet sich in ihrem inaktiven Zustand 18, da eine Betätigung des Betätigungselements 11 kein Verstellen der Sperreinrichtung 13 in den Freigabezustand bewirkt. In unbetätigter Stellung 21 des zweiten Betätigungselements 12 befindet sich die Rampe 58 außerhalb des Schwenkwegs des Arms 55. Im Ausführungsbeispiel besitzt die Rampe 58 zur Position des Arms 55 in betätigter Stellung 20 des ersten Betätigungselements 11 einen Abstand a.

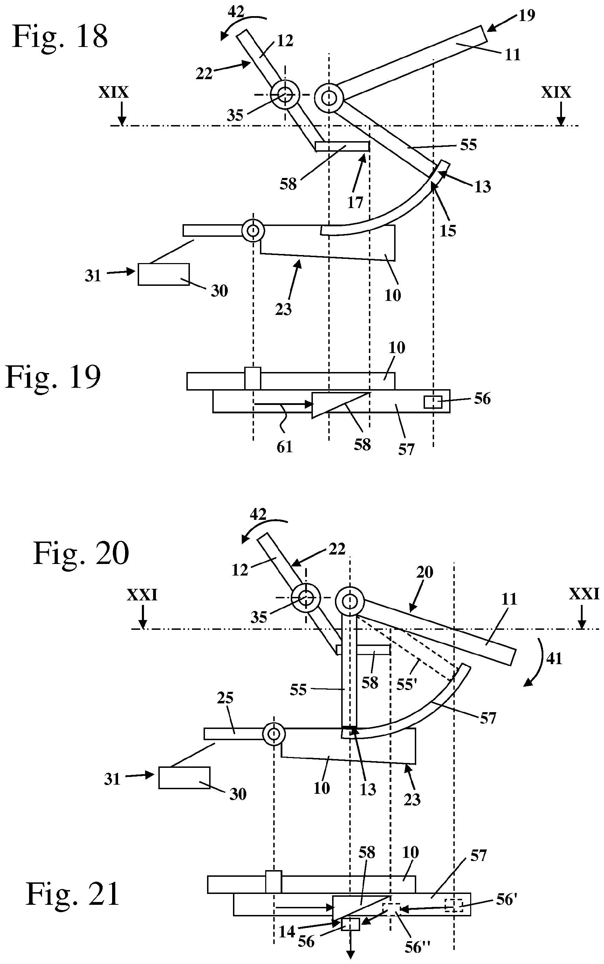

Fig. 18 und Fig. 19 zeigen die Anordnung nach einer Betätigung des zweiten Betätigungselements 12 in Bedienrichtung 42. In den Fig. 18 und 19 befindet sich das Betätigungselement 12 in seiner betätigten Stellung 22. Die Rampe 58 hat sich dadurch in Richtung eines Pfeils 61 in den Schwenkweg des Arms 55 bewegt. Das erste Betätigungselement 11 befindet sich in seiner unbetätigten Stellung 19, und die Sperreinrichtung 13 befindet sich in ihrer Sperrstellung 15. Die durch den Arm 55 und die Rampe 58 gebildete Übertragungseinrichtung 16 ist nun jedoch in ihrem aktiven Zustand 17. Aufgrund der Rampe 58 wird bei einer Betätigung des ersten Betätigungselements 11 eine Verstellung der Sperreinrichtung 13 in ihre Freigabestellung 14 bewirkt.

Fig. 20 zeigt die Anordnung bei betätigtem ersten Betätigungselement 11 und betätigtem zweiten Betätigungselement 12. Der Arm 55 hat sich entlang der Sperrkontur 57 bewegt. Wie Fig. 21 zeigt, hat die Rampe 58 ein seitliches Auslenken des Arms 55 bewirkt. Das Sperrelement 56 hat sich aus der mit gestrichelter Linie gezeigten Position 56' über die mit gestrichelter Linie gezeigte Position 56" etwa entlang der Rampe 58 in die mit durchgezogener Linie gezeigte Position des Sperrelements 56 bewegt. Wie Fig. 21 zeigt, befindet sich das Sperrelement 56 außerhalb des Schwenkwegs der Sperrkontur 57. Die Sperreinrichtung 13 befindet sich dadurch in ihrer Freigabestellung 14.

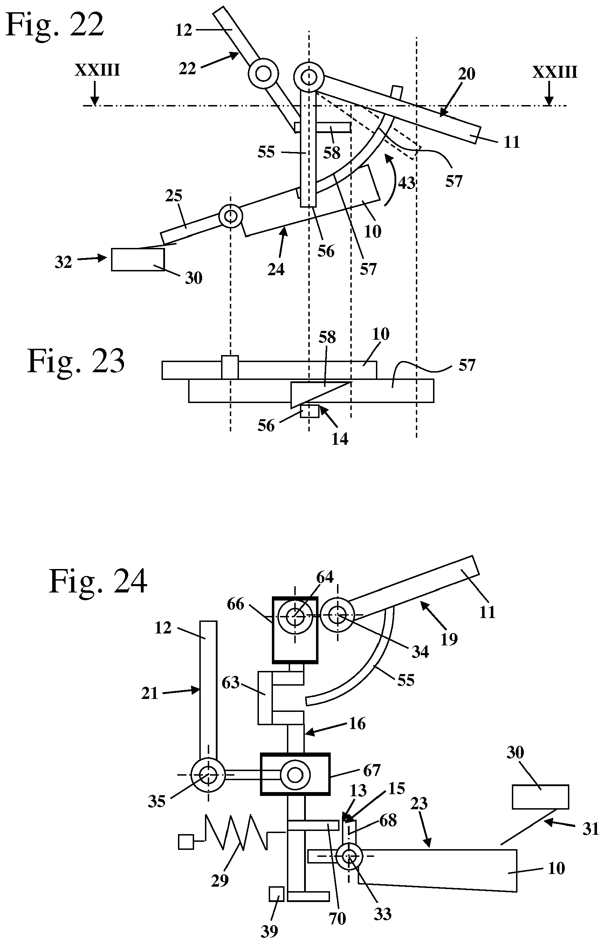

Die Fig. 22 und 23 zeigen die Anordnung mit dem Bedienelement 10 in seiner betätigten Stellung 24. Beim Betätigen des Bedienelements 10 bewegt sich die Sperrkontur 57 mit dem Bedienelement 10 am Sperrelement 56 vorbei, und der Betätigungsabschnitt 25 verstellt den Schalter 30 in seinen betätigten Zustand 32.

Auch beim Ausführungsbeispiel nach den Fig. 14 bis 23 ist eine alternative Bedienreihenfolge möglich. Aus der in den Fig. 16 und 17 gezeigten Anordnung mit betätigtem ersten Betätigungselement 11 und unbetätigtem zweiten Betätigungselement 12 kann ein Bediener das zweite Betätigungselement 12 betätigen. Die Rampe 58 lenkt dadurch den Arm 55 seitlich aus, so dass auch bei alternativer Bedienreihenfolge ein Verstellen der Sperreinrichtung 13 in ihre in Fig. 20 und 21 gezeigte Freigabestellung 14 erfolgt.

Die Fig. 24 bis 27 zeigen eine alternative Ausführung. Bei der in den Fig. 24 bis 27 gezeigten Ausführung umfasst die Übertragungseinrichtung 16 einen Zwischenhebel 63, der um eine Schwenkachse 64 schwenkbar gelagert ist. Der Zwischenhebel 63 besitzt eine erste Führung 66, die eine Verschiebung des Zwischenhebels 63 gegenüber der Schwenkachse 64 quer zur Schwenkachse 64, in der Darstellung in Fig. 24 in vertikaler Richtung, ermöglicht. Der Zwischenhebel 63 besitzt außerdem eine zweite Führung 67, auf die das zweite Betätigungselement 12 wirkt. Der Zwischenhebel 63 ist über eine Feder 29 gefedert gelagert. Die Feder 29 ist schematisch dargestellt und als Druckfeder ausgebildet und spannt den Schwenkhebel 63 entgegen einer Verschwenkung um die Schwenkachse 64 bei einer Betätigung des ersten Betätigungselements 11 vor. Der Zwischenhebel 63 stützt sich entgegen einer Verschwenkung um die Schwenkachse 64 bei einer Betätigung des ersten Betätigungselements 11 in der in Fig. 23 gezeigten Lage außerdem über eine gehäusefeste Abstützung 39 ab. Am Zwischenhebel 63 ist ein Sperrelement 70 einer Sperreinrichtung 13 angeordnet, das in der in Fig. 24 gezeigten Anordnung mit einem Sperrabschnitt 68 des Bedienelements 10 zusammenwirkt und ein Verschwenken des Bedienelement 10 verhindert. Bei der in Fig. 24 gezeigten Position verhindert die Abstützung 39, dass der Sperrabschnitt 68 den Zwischenhebel 63 über das Sperrelement 70 um die Schwenkachse 64 verschwenken kann. In der in Fig. 24 gezeigten Position befindet sich das erste Betätigungselement 11 in seiner unbetätigten Stellung 19, das zweite Betätigungselement 12 in seiner unbetätigten Stellung 21, das Bedienelement 10 in seiner unbetätigten Stellung 23 und der Schalter 30 in seinem unbetätigten Zustand 31. Die Sperreinrichtung 13 befindet sich in Sperrstellung 15.

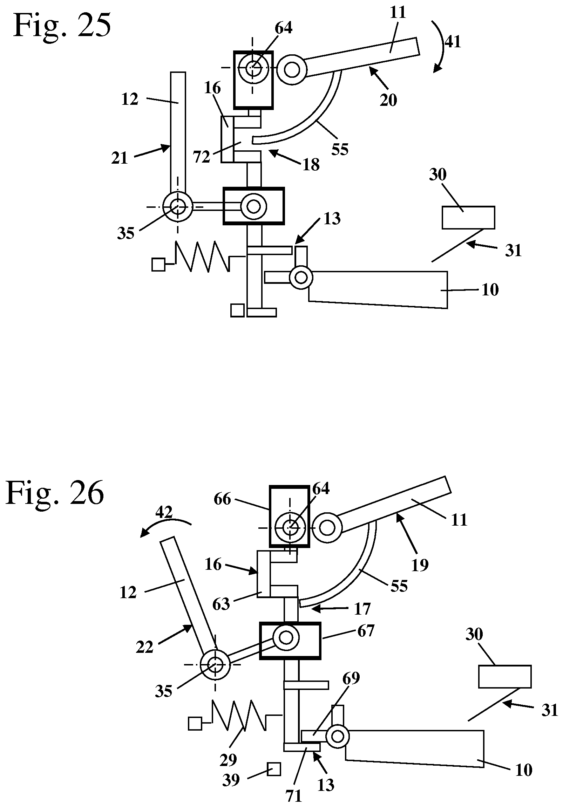

Fig. 25 zeigt die Anordnung nach einem Verschwenken des ersten Betätigungselements 11 in Bedienrichtung 41. Am ersten Betätigungselement 11 ist im Ausführungsbeispiel ein Arm 55 fixiert. In unbetätigter Stellung 21 der zweiten Betätigungseinrichtung 12 taucht der Arm 55 bei einer Betätigung des ersten Betätigungselements 11 in eine Aussparung 72 des Zwischenhebels 63 ein. Das erste Betätigungselement 11 wirkt nicht auf den Zwischenhebel 63, und die durch den Zwischenhebel 63 gebildete Übertragungseinrichtung 16 befindet sich in ihrem inaktiven Zustand 18.

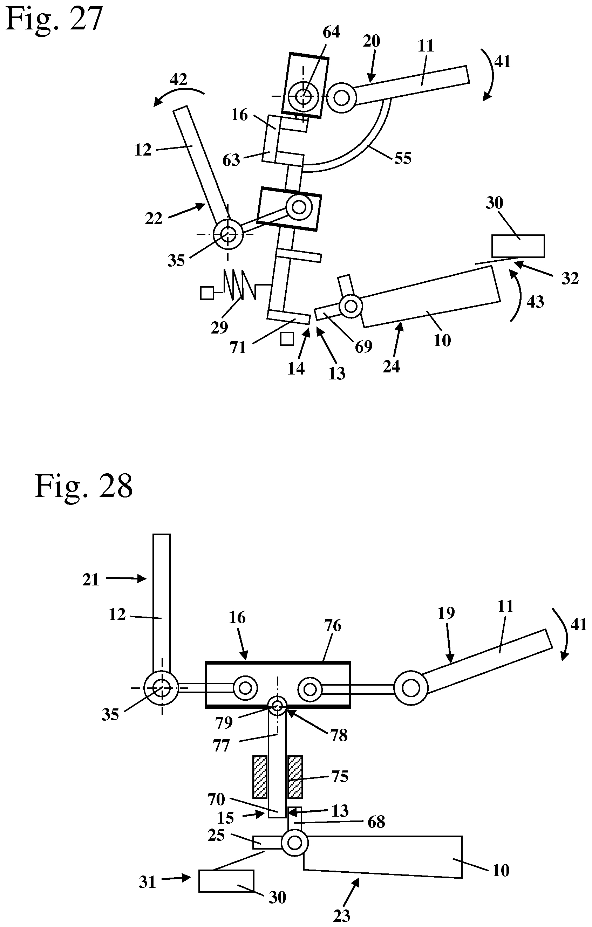

Wird aus der in Fig. 24 gezeigten Anordnung das zweite Betätigungselement 12 in Bedienrichtung 42 in seine betätigte Stellung 22 verstellt, so wird der Zwischenhebel 63 gegenüber seiner Schwenkachse 64 verschoben. Der Zwischenhebel 63 gelangt aus dem Bereich der Abstützung 39. In der in Fig. 26 gezeigten Position liegt ein Sperrelement 71 des Zwischenhebels 63 im Schwenkbereich eines zweiten Sperrabschnitts 69 des Bedienelements 10. Dadurch kann das Bedienelement 10 nicht betätigt werden. Der Zwischenhebel 63 liegt unmittelbar benachbart zum freien Ende des Arms 55, so dass die Übertragungseinrichtung 16 sich in ihrem aktiven Zustand 17 befindet. Wird aus der in Fig. 26 gezeigten Position das erste Betätigungselement 11 in Bedienrichtung 41 betätigt, wie in Fig. 27 gezeigt ist, so verschwenkt der Zwischenhebel 63 um die Schwenkachse 64, und das Sperrelement 71 gelangt aus dem Schwenkbereich des Sperrabschnitts 69. Die Sperreinrichtung 13 befindet sich dadurch in ihrem Freigabezustand 14. Fig. 27 zeigt die Anordnung mit dem Bedienelement 10 in seiner betätigten Stellung 24. In dieser Stellung ist der Schalter 30 in seinem betätigten Zustand 32. Der Sperrabschnitt 69 liegt mit seiner Stirnseite am zweiten Sperrelement 71 an und verhindert dadurch, dass der Zwischenhebel 63 zurückschwenken kann, selbst wenn das erste Betätigungselement 11 vom Bediener losgelassen wird.

Beim Ausführungsbeispiel nach den Fig. 24 bis 27 ist die Bedienreihenfolge konstruktiv vorgegeben. Der Bediener muss zuerst das zweite Betätigungselement 12 betätigen, bevor das erste Betätigungselement 11 betätigt wird. Wird zuerst das Betätigungselement 11 betätigt, wie in Fig. 25 gezeigt, so sperrt der Arm 55 eine nachfolgende Bewegung des zweiten Betätigungselements 12 und des Zwischenhebels 63.

Die Fig. 28 bis 31 zeigen ein weiteres Ausführungsbeispiel. Wie Fig. 28 zeigt, ist eine Übertragungseinrichtung 16 vorgesehen, die einen Hebel 76 umfasst, auf den beide Betätigungselemente 11 und 12 wirken. Der Hebel 76 ist an einem Schwenkgelenk 78 um eine Schwenkachse 79 schwenkbar an einem Sperrabschnitt 77 gelagert. Der Sperrabschnitt 77 ist in einer gehäusefesten Führung 75 in seiner Längsrichtung verschiebbar gelagert und bildet mit seinem freien Ende ein Sperrelement 70 einer Sperreinrichtung 13. Das Sperrelement 70 liegt im Schwenkweg eines Sperrabschnitts 68 des Bedienelements 10, so dass sich die Sperreinrichtung 13 in ihrer Sperrstellung 15 befindet.

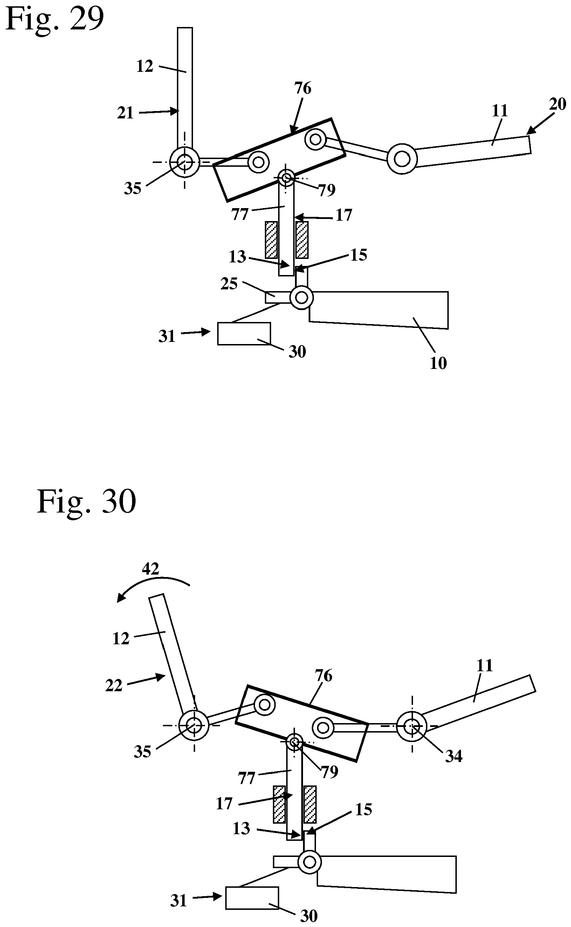

Wird das erste Betätigungselement 11 in Bedienrichtung 41 bewegt, so gelangt die Anordnung in die in Fig. 29 gezeigte Position. Der Hebel 76 ist nach Art einer Wippe ausgebildet, so dass ein Verschwenken eines Betätigungselements 11 ein Verschwenken des Hebels 76 um die Schwenkachse 79 bewirkt, jedoch keine Bewegung des Sperrabschnitts 77 in seiner Längsrichtung. In der in Fig. 29 gezeigten Position befindet sich die Sperreinrichtung 13 demnach noch in ihrer Sperrstellung 15. Der Schalter 30 befindet sich in seinem unbetätigten Zustand 31.

Wird ausgehend von der in Fig. 28 gezeigten Position das zweite Betätigungselement 12 in Bedienrichtung 42 betätigt, wie in Fig. 30 gezeigt, so verschwenkt der Hebel 76 in Gegenrichtung, der Abschnitt 77 bewegt sich jedoch nicht, so dass sich die Sperreinrichtung 13 weiterhin in ihrer Sperrstellung 15 befindet.

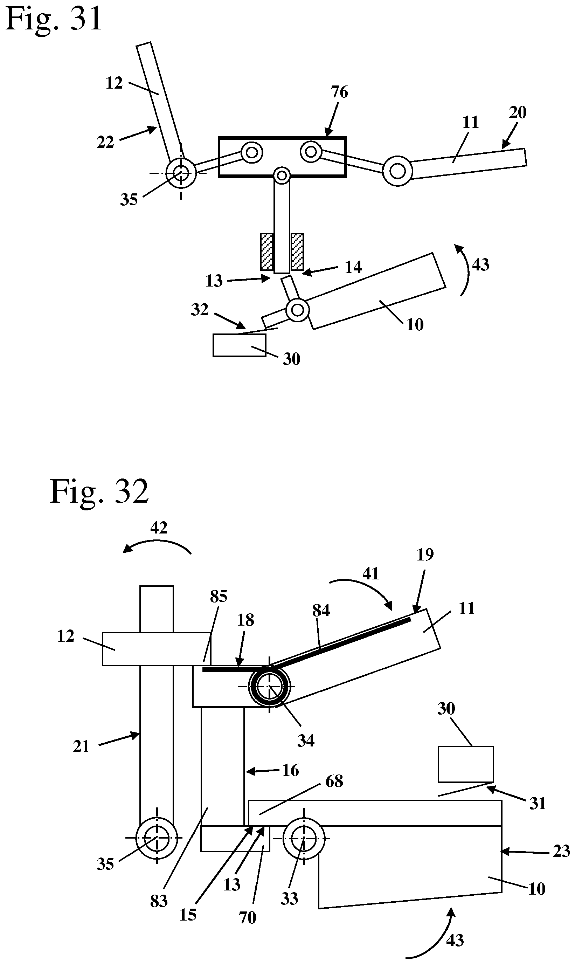

Durch Verstellung des ersten Betätigungselements 11 in seine betätigte Stellung 20, wie in Fig. 29 gezeigt, oder durch Verstellung des zweiten Betätigungselements 12 in seine betätigte Stellung 22, wie in Fig. 30 gezeigt, wird die Übertragungseinrichtung 16 in ihren aktiven Zustand 17 verstellt. Eine Betätigung des jeweils anderen Betätigungselements 11, 12 führt, wie Fig. 31 zeigt, zur Verstellung der Sperreinrichtung 13 in ihren Freigabezustand 14. Dadurch ist eine Betätigung des Bedienelements 10, also eine Verstellung des Bedienelements 10 in seinen in Fig. 31 gezeigten betätigten Zustand 24, möglich. Beim Ausführungsbeispiel nach den Fig. 28 bis 31 sind die Betätigungselemente 11 und 12 gleichwirkend, da beide jeweils auf ein Ende des Hebels 67 wirken.

Fig. 32 zeigt schematisch eine weitere Ausführungsvariante mit einem um eine Schwenkachse 35 schwenkbar gelagerten zweiten Betätigungselement 12, einem um eine Schwenkachse 34 schwenkbar gelagerten Betätigungselement 11 sowie einem um eine Schwenkachse 33 schwenkbar gelagerten Bedienelement 10. Das Bedienelement 10 besitzt einen Sperrabschnitt 68, der in dem gezeigten Sperrzustand 15 der Sperreinrichtung 13 mit einem Sperrelement 70 eines Zwischenhebels 83 zusammenwirkt. Der Zwischenhebel 83 ist um die Schwenkachse 34 des ersten Betätigungselements 11 schwenkbar gelagert und an dieses über eine Feder 84 gekoppelt.

Fig. 32 zeigt die Anordnung in unbetätigter Stellung 19 des ersten Betätigungselements 11, unbetätigter Stellung 21 des zweiten Betätigungselements 12, inaktivem Zustand 18 der Übertragungseinrichtung 16, unbetätigter Stellung 23 des Bedienelements 10 und unbetätigtem Zustand 31 des Schalters 30. Wird das erste Betätigungselement 11 aus der in Fig. 32 gezeigten Position in Bedienrichtung 41 betätigt, so wird die Feder 84 gespannt. Der Zwischenhebel 83 bewegt sich jedoch nicht, da er über einen Fortsatz 85 des zweiten Betätigungselements 12 mechanisch an einer Schwenkbewegung gehindert ist. Wird das zweite Betätigungselement 12 bei unbetätigtem erstem Betätigungselement 11 in Bedienrichtung 42 verschwenkt, so gibt der Fortsatz 85 eine Schwenkbewegung des Zwischenhebels 83 frei. Die Übertragungseinrichtung 16 befindet sich in ihrem aktiven Zustand. Wird anschließend das erste Betätigungselement 11 in Bedienrichtung 41 verschwenkt, so verschwenkt der Zwischenhebel 83 mit dem Betätigungselement 11 und verstellt die Sperreinrichtung 13 in ihren Freigabezustand 14.

Auch beim Ausführungsbeispiel nach Fig. 32 ist eine alternative Bedienreihenfolge möglich. Wird zuerst das Betätigungselement 11 in Bedienrichtung 41 betätigt, so wird die Feder 84 vorgespannt. Wird dann das zweite Betätigungselement 12 in Bedienrichtung 42 verschwenkt, so wird die Bewegung des Zwischenhebels 83 freigegeben und die Sperreinrichtung 13 in ihren Freigabezustand 14 verstellt.

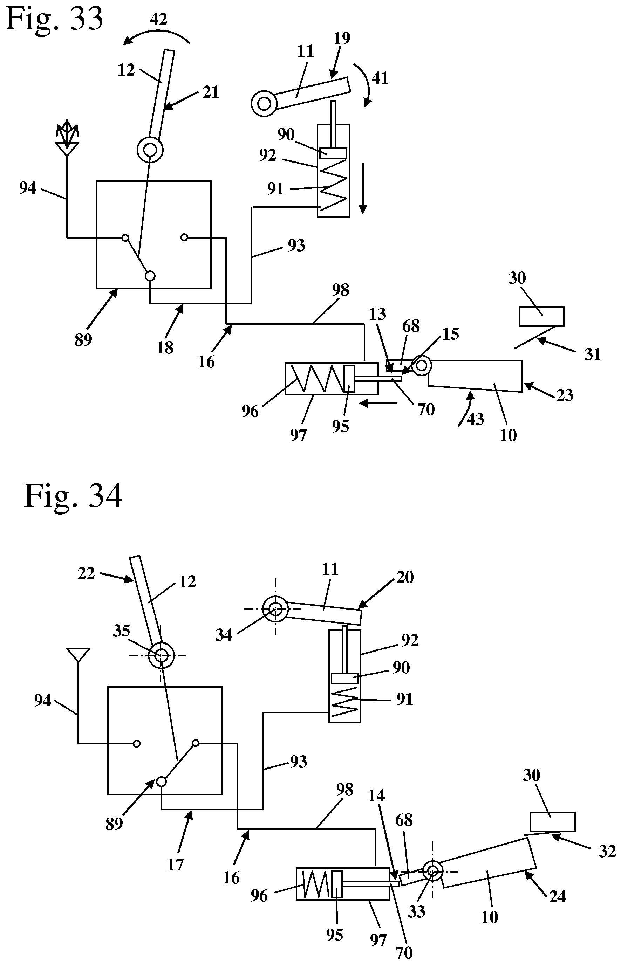

Die Fig. 33 und 34 zeigen ein Ausführungsbeispiel, bei dem die Übertragungseinrichtung 16 eine hydraulische oder pneumatische Übertragungseinrichtung 16 ist. Fig. 33 zeigt die Anordnung mit der Übertragungseinrichtung 16 in inaktivem Zustand 18. Das erste Betätigungselement 11 ist in unbetätigter Stellung 19 gezeigt. Das erste Betätigungselement 11 wirkt beim Betätigen in Bedienrichtung 41 auf einen Kolben 90, der in einem Zylinder 92 gelagert ist und der von einer Feder 91 entgegen der Bedienrichtung 41 vorgespannt ist. Das Innere des Zylinders 91 ist über eine Leitung 93 mit einem Ventil 89 verbunden. In unbetätigter Stellung 21 des zweiten Betätigungselements 12 verbindet das Ventil 89 die Leitung 93 mit einer Leitung 94, die in die Umgebung öffnet. Das Ventil 89 ist über eine weitere Leitung 98 mit einem Kolben 95 in einem zweiten Zylinder 97 verbunden, der von einer Feder 96 beaufschlagt ist. Am Kolben 95 ist ein Sperrelement 70 ausgebildet, das in Sperrstellung 13 mit einem Sperrabschnitt 68 des Bedienelements 10 zusammenwirkt und dadurch eine Verstellung des Bedienelements 10 in Bedienrichtung 43 sperrt. Die Feder 96 spannt den Kolben 95 in Richtung auf die Sperrstellung 15 der Sperreinrichtung 13 vor. In der gezeigten Stellung des Ventils 89 ist die Leitung 93 nicht mit der Leitung 98 verbunden. Eine Betätigung des ersten Betätigungselements 11 in Bedienrichtung 41 wirkt bei unbetätigtem zweitem Betätigungselement 12 daher nicht auf die Sperreinrichtung 13, die sich in Fig. 33 in ihrer Sperrstellung 15 befindet.

Fig. 34 zeigt die Anordnung in betätigter Stellung 22 des zweiten Betätigungselements 12. In dieser Stellung des zweiten Betätigungselements 12 verbindet das Ventil 89 die Leitung 93 mit der Leitung 98. Wird das erste Betätigungselement 11 in seine betätigte Stellung 20 verstellt, so bewegt sich der Kolben 90 im Zylinder 92 und drückt Gas oder Fluid durch die Leitung 93 über das Ventil 89 in die Leitung 98 und von dort in den Zylinder 97. Dies bewirkt eine Verstellung des Kolbens 95 entgegen der Kraft der Feder 96. Dadurch gelangt das Sperrelement 70 aus dem Schwenkweg des Sperrabschnitts 68, und das Bedienelement 10 kann in die in Fig. 34 gezeigte betätigte Stellung 24 bewegt werden. Dadurch wird der Schalter 30 in seinen betätigten Zustand 32 verstellt. Wie Fig. 34 zeigt, sind der Sperrabschnitt 68 und das Sperrelement 70 so angeordnet, dass der Sperrabschnitt 68 in betätigter Stellung 24 des Bedienelements 10 das Sperrelement 70 in Freigabestellung 14 der Sperreinrichtung 13 hält. Dadurch kann der Bediener die Betätigungselemente 11 und 12 bei betätigter Stellung 24 des Bedienelements 10 loslassen.

Weitere vorteilhafte Ausführungsformen ergeben sich durch beliebige Kombinationen der vorstehend beschriebenen Ausführungsbeispiele. Die schematischen Darstellungen geben die einzelnen Funktionsprinzipien wieder und sind nicht auf die gezeigte Gestaltung begrenzt, sondern können unter Beibehaltung der Funktionsprinzipien in geeigneter Weise abgewandelt werden, um vorteilhafte konstruktive Gestaltungen zu erhalten.

## Patentansprüche

1. Handgeführtes Arbeitsgerät mit einem Antriebsmotor (3) und mit einem Bedienelement (10) zur Ansteuerung des Antriebsmotors (3), wobei das Arbeitsgerät (1) ein Gehäuse (2), ein erstes Betätigungselement (11) und ein zweites Betätigungselement (12) besitzt, wobei das erste Betätigungselement (11) auf eine Sperreinrichtung (13) für das Bedienelement (10) wirkt, wobei die Sperreinrichtung (13) eine Freigabestellung (14) besitzt, in der das Bedienelement (10) zur Ansteuerung des Antriebsmotors (3) freigegeben ist, und wobei die Sperreinrichtung (13) eine Sperrstellung (15) besitzt, in der die Sperreinrichtung (13) eine Betätigung des Bedienelements (10) mechanisch sperrt,
**dadurch gekennzeichnet, dass** das erste Betätigungselement (11) über eine Übertragungseinrichtung (16) auf die Sperreinrichtung (13) wirkt und dass die Übertragungseinrichtung (16) in betätigter Stellung (22) des zweiten Betätigungselements (12) eine Wirkverbindung zwischen dem ersten Betätigungselement (11) und der Sperreinrichtung (13) herstellt, so dass sich die Sperreinrichtung (13) in betätigter Stellung (20) des ersten Betätigungselements (11) in der Freigabestellung (14) und in unbetätigter Stellung (20) des ersten Betätigungselements (11) in der Sperrstellung (15) befindet, und wobei die Übertragungseinrichtung (16) in unbetätigter Stellung (21) des zweiten Betätigungselements (12) wirkungslos ist, so dass die Sperreinrichtung (13) sich unabhängig von der Stellung (19, 20) des ersten Betätigungselements (11) in der Sperrstellung (15) befindet.

2. Arbeitsgerät nach Anspruch 1,
**dadurch gekennzeichnet, dass** das Bedienelement (10) in seiner betätigten Stellung (24) das erste Betätigungselement (11) in seiner betätigten Stellung (20) hält.

3. Arbeitsgerät nach Anspruch 1 oder 2,
**dadurch gekennzeichnet, dass** das zweite Betätigungselement (12) in unbetätigter Stellung (21) die Sperreinrichtung (13) in ihrer Sperrstellung (15) hält.

4. Arbeitsgerät nach einem der Ansprüche 1 bis 3,
**dadurch gekennzeichnet, dass** eine Haltekontur (48) vorgesehen ist, die das Sperrelement (40) in betätigter Stellung (24) des Bedienelements (10) in Freigabestellung (13) hält.

5. Arbeitsgerät nach einem der Ansprüche 1 bis 4,
**dadurch gekennzeichnet, dass** die Sperreinrichtung (13) mindestens ein Sperrelement (40, 70) umfasst, wobei sich das Sperrelement (40, 70) in der Sperrstellung (15) an einer Abstützung (39) abstützt und eine Bewegung des Bedienelements (10) in Bedienrichtung (43) blockiert.

6. Arbeitsgerät nach einem der Ansprüche 1 bis 5,
**dadurch gekennzeichnet, dass** die Übertragungseinrichtung (16) ein Schwenkgelenk (28) umfasst, und dass das zweite Betätigungselement (12) die Lage des Schwenkgelenks (28) verändert.

7. Arbeitsgerät nach Anspruch 6,
**dadurch gekennzeichnet, dass** das Schwenkgelenk (28) in einer Führung (51) geführt ist, deren Lage vom zweiten Betätigungselement (12) verstellt wird.

8. Arbeitsgerät nach einem der Ansprüche 1 bis 5,
**dadurch gekennzeichnet, dass** die Übertragungseinrichtung (16) ein elastisches Element umfasst und eine Bewegung des ersten Betätigungselements (11) in Bedienrichtung (41) in Sperrstellung (15) der Sperreinrichtung (13) und in unbetätigter Stellung (21) des zweiten Betätigungselements (12) eine Verformung des elastischen Elements bewirkt.

9. Arbeitsgerät nach einem der Ansprüche 1 bis 5,
**dadurch gekennzeichnet, dass** die Sperreinrichtung (13) eine Sperrkontur (57) besitzt, die in der Sperrstellung (15) mit einem Element der Übertragungseinrichtung (16) in Kontakt ist, und dass das zweite Betätigungselement (12) in betätigter Stellung (22) bei einer Betätigung des ersten Betätigungselements (11) das Element der Übertragungseinrichtung (16) außer Kontakt mit der Sperrkontur (57) bringt.

10. Arbeitsgerät nach Anspruch 9,
**dadurch gekennzeichnet, dass** die Sperrkontur (57) fest mit dem Bedienelement (10) verbunden ist und dass das zweite Betätigungselement (12) das Element der Übertragungseinrichtung (16) über eine Rampe (58) aus dem Bewegungsbereich der Sperrkontur (57) auslenkt.

11. Arbeitsgerät nach einem der Ansprüche 1 bis 5,
**dadurch gekennzeichnet, dass** die Übertragungseinrichtung (16) einen Zwischenhebel (63) besitzt, auf den das erste Betätigungselement (11) wirkt, und dass das erste Betätigungselement (11) in unbetätigter Stellung (21) des zweiten Betätigungselements (12) gegenüber dem Zwischenhebel (63) frei verschwenken kann und in betätigter Stellung (22) des zweiten Betätigungselements (12) eine Verschwenkbewegung des ersten Betätigungselements (11) eine Verschwenkbewegung des Zwischenhebels (63) bewirkt.

12. Arbeitsgerät nach Anspruch 11,
**dadurch gekennzeichnet, dass** die Sperreinrichtung (13) mindestens ein an dem Zwischenhebel (63) ausgebildetes Sperrelement (70, 71) besitzt, das beim Verschwenken des Zwischenhebels (63) aus dem Schwenkbereich des Bedienelements (10) geschwenkt wird.

13. Arbeitsgerät nach einem der Ansprüche 1 bis 5,
**dadurch gekennzeichnet, dass** die Übertragungseinrichtung (16) einen Hebel (76) umfasst, auf den das erste Betätigungselement (11) und das zweite Betätigungselement (12) wirken, wobei der Hebel (76) derart gelenkig gelagert ist, dass die Übertragungseinrichtung (16) nur dann auf die Sperreinrichtung (13) wirkt, wenn das erste Betätigungselement (11) und das zweite Betätigungselement (12) betätigt sind.

14. Arbeitsgerät nach einem der Ansprüche 1 bis 4,
**dadurch gekennzeichnet, dass** die Übertragungseinrichtung (16) eine hydraulische oder pneumatische Übertragungseinrichtung (16) ist, und dass das zweite Betätigungselement (12) in unbetätigter Stellung (21) eine hydraulische oder pneumatische Verbindung zwischen dem ersten Betätigungselement (11) und der Sperreinrichtung (13) unterbricht.

## Claims

1. Hand-guided working implement with a drive motor (3) and with a control (10) for activating the drive motor (3), wherein the working implement (1) has a housing (2), a first actuating element (11) and a second actuating element (12), wherein the first actuating element (11) acts on a locking device (13) for the control (10), wherein the locking device (13) has an enabling position (14), in which the control (10) is enabled for activating the drive motor (3), and wherein the locking device (13) has a locking position (15), in which the locking device (13) mechanically blocks an actuation of the control (10),
**characterised in that** the first actuating element (11) acts on the locking device (13) by way of a transmission device (16), and **in that** the transmission device (16) establishes an operative connection between the first actuating element (11) and the locking device (13) in the actuated position (22) of the second actuating element (12), so that the locking device (13) is in the enabling position (14) in the actuated position (20) of the first actuating element (11) and in the locking position (15) in the non-actuated position (20) of the first actuating element (11), and wherein the transmission device (16) is inactive in the non-actuated position (21) of the second actuating element (12), so that the locking device (13) is in the locking position (15) irrespective of the position (19, 20) of the first actuating element (11).

2. Working implement according to claim 1,
**characterised in that** the control (10) holds in its actuated position (24) the first actuating element (11) in its actuated position (20).

3. Working implement according to claim 1 or 2,
**characterised in that** the second actuating element (12) holds in its non-actuated position (21) the locking device (13) in its locking position (15).

4. Working implement according to any of claims 1 to 3,
**characterised in that** a holding contour (48) is provided to hold the locking element (40) in the enabling position (13) in the actuated position (24) of the control (10).

5. Working implement according to any of claims 1 to 4,
**characterised in that** the locking device (13) comprises at least one locking element (40, 70), wherein the locking element (40, 70) is supported on a support (39) in the locking position (15) and blocks a movement of the control (10) in the operating direction (43).

6. Working implement according to any of claims 1 to 5,
**characterised in that** the transmission device (16) comprises a swivel joint (28), and **in that** the second actuating element (12) changes the position of the swivel joint (28).

7. Working implement according to claim 6,
**characterised in that** the swivel joint (28) is guided in a guide (51), the position of which is adjusted by the second actuating element (12).

8. Working implement according to any of claims 1 to 5,
**characterised in that** the transmission device (16) comprises an elastic element, and **in that** a movement of the first actuating element (11) in the operating direction (41) causes a deformation of the elastic element in the locking position (15) of the locking device (13) and in the non-actuated position (21) of the second actuating element (12).

9. Working implement according to any of claims 1 to 5,
**characterised in that** the locking device (13) has a locking contour (57), which is in contact with an element of the transmission device (16) in the locking position (15), and **in that** the locking contour (57) moves the element of the transmission device (16) out of contact with the locking contour (57) in the actuated position (22) on actuation of the first actuating element (11).

10. Working implement according to claim 9,
**characterised in that** the locking contour (57) is permanently connected to the control (10), and **in that** the locking contour (57) deflects the element of the transmission device (16) from the movement range of the locking contour (57) by way of a ramp (58).

11. Working implement according to any of claims 1 to 5,
**characterised in that** the transmission device (16) has an intermediate lever (63), on which the first actuating element (11) acts, and **in that** the first actuating element (11) is freely pivotable with respect to the intermediate lever (63) in the non-actuated position (21) of the second actuating element (12), and **in that** in the actuated position (22) of the second actuating element (12) a pivoting movement of the first actuating element (11) causes a pivoting movement of the intermediate lever (63).

12. Working implement according to claim 11,
**characterised in that** the locking device (13) has at least one locking element (70, 71), which is formed at the intermediate lever (63) and is pivoted out of the pivoting region of the control (10) when the intermediate lever (63) is pivoted.

13. Working implement according to any of claims 1 to 5,
**characterised in that** the transmission device (16) comprises a lever (76), on which the first actuating element (11) and the second actuating element (12) act, wherein the lever (76) is articulated in such a way that the transmission device (16) only acts on the locking device (13) if the first actuating element (11) and the second actuating element (12) are actuated.

14. Working implement according to any of claims 1 to 4,
**characterised in that** the transmission device (16) is a hydraulic or pneumatic transmission device (16), and **in that** the second actuating element (12) breaks a hydraulic or pneumatic connection between the first actuating element (11) and the locking device (13) in the non-actuated position (21).

## Revendications

1. Appareil de travail à main avec un moteur d'entraînement (3) et avec un élément de manœuvre (10) pour piloter le moteur d'entraînement (3), dans lequel l'appareil de travail (1) comporte un boîtier (2), un premier élément d'actionnement (11) et un deuxième élément d'actionnement (12), dans lequel le premier élément d'actionnement (11) agit sur un dispositif de blocage (13) pour l'élément de manœuvre (10), dans lequel le dispositif de blocage (13) a une position de déblocage (14) dans laquelle l'élément de manœuvre (10) est débloqué pour piloter le moteur d'entraînement (3), et dans lequel le dispositif de blocage (13) a une position de blocage (15) dans laquelle il bloque mécaniquement un actionnement de l'élément de manœuvre (10),
**caractérisé en ce que** le premier élément d'actionnement (11) agit par un dispositif de transmission (16) sur le dispositif de blocage (13) et **en ce que** le dispositif de transmission (16), dans la position actionnée (22) du deuxième élément d'actionnement (12), établit une relation fonctionnelle entre le premier élément d'actionnement (11) et le dispositif de blocage (13), de sorte que le dispositif de blocage (13), dans la position actionnée (20) du premier élément d'actionnement (11), se trouve dans la position de déblocage (14) et, dans la position non actionnée (20) du premier élément d'actionnement (11), se trouve dans la position de blocage (15), et dans lequel le dispositif de transmission (16), dans la position non actionnée (21) du deuxième élément d'actionnement (12), est sans effet, de sorte que le dispositif de blocage (13) se trouve dans la position de blocage (15) indépendamment de la position (19, 20) du premier élément d'actionnement (11).

2. Appareil de travail selon la revendication 1,
**caractérisé en ce que** l'élément de manœuvre (10), dans sa position actionnée (24), maintient le premier élément d'actionnement (11) dans sa position actionnée (20).

3. Appareil de travail selon la revendication 1 ou 2,
**caractérisé en ce que** le deuxième élément d'actionnement (12), dans la position non actionnée (21), maintient le dispositif de blocage (13) dans sa position de blocage (15).

4. Appareil de travail selon l'une des revendications 1 à 3,
**caractérisé en ce qu'**il est prévu un contour de maintien (48) qui maintient l'élément de blocage (40) dans la position actionnée (24) de l'élément de manœuvre (10) dans la position de déblocage (13).

5. Appareil de travail selon l'une des revendications 1 à 4,
**caractérisé en ce que** le dispositif de blocage (13) comprend au moins un élément de blocage (40, 70), dans lequel l'élément de blocage (40, 70), dans la position de blocage (15), s'appuie sur un appui (39) et bloque un mouvement de l'élément de manœuvre (10) dans la direction de manœuvre (43).

6. Appareil de travail selon l'une des revendications 1 à 5,
**caractérisé en ce que** le dispositif de transmission (16) comprend une articulation pivotante (28) et **en ce que** le deuxième élément d'actionnement (12) change la position de l'articulation pivotante (28).

7. Appareil de travail selon la revendication 6,
**caractérisé en ce que** l'articulation pivotante (28) est guidée dans un guide (51) dont la position est réglée par le deuxième élément d'actionnement (12).

8. Appareil de travail selon l'une des revendications 1 à 5,
**caractérisé en ce que** le dispositif de transmission (16) comprend un élément élastique, et un mouvement du premier élément d'actionnement (11) dans la direction de manœuvre (41) dans la position de blocage (15) du dispositif de blocage (13) et dans la position non actionnée (21) du deuxième élément d'actionnement (12) provoque une déformation de l'élément élastique.

9. Appareil de travail selon l'une des revendications 1 à 5,
**caractérisé en ce que** le dispositif de blocage (13) a un contour de blocage (57) qui, dans la position de blocage (15), est en contact avec un élément du dispositif de transmission (16), et **en ce que** le deuxième élément d'actionnement (12), dans la position actionnée (22), supprime lors d'un actionnement du premier élément d'actionnement (11) le contact de l'élément du dispositif de transmission (16) avec le contour de blocage (57).

10. Appareil de travail selon la revendication 9,
**caractérisé en ce que** le contour de blocage (57) est relié de manière fixe à l'élément de manœuvre (10) et **en ce que** le deuxième élément d'actionnement (12) dévie l'élément du dispositif de transmission (16) hors de la zone de mouvement du contour de blocage (57) via une rampe (58).

11. Appareil de travail selon l'une des revendications 1 à 5,
**caractérisé en ce que** le dispositif de transmission (16) a un levier intermédiaire (63) sur lequel agit le premier élément d'actionnement (11) et **en ce que** le premier élément d'actionnement (11), dans la position non actionnée (21) du deuxième élément d'actionnement (12), peut pivoter librement par rapport au levier intermédiaire (63), et dans la position actionnée (22) du deuxième élément d'actionnement (12) un mouvement pivotant du premier élément d'actionnement (11) provoque un mouvement pivotant du levier intermédiaire (63).

12. Appareil de travail selon la revendication 11,
**caractérisé en ce que** le dispositif de blocage (13) a au moins un élément de blocage (70, 71) formé sur le levier intermédiaire (63), qui pivote lors du pivotement du levier intermédiaire (63) hors de la zone de pivotement de l'élément de manœuvre (10).

13. Appareil de travail selon l'une des revendications 1 à 5,
**caractérisé en ce que** le dispositif de transmission (16) comprend un levier (76) sur lequel agissent le premier élément d'actionnement (11) et le deuxième élément d'actionnement (12), dans lequel le levier (76) est monté de manière articulée de telle sorte que le dispositif de transmission (16) n'agisse sur le dispositif de blocage (13) que si le premier élément d'actionnement (11) et le deuxième élément d'actionnement (12) sont actionnés.

14. Appareil de travail selon l'une des revendications 1 à 4,
**caractérisé en ce que** le dispositif de transmission (16) est un dispositif de transmission hydraulique ou pneumatique (16) et **en ce que** le deuxième élément d'actionnement (12), dans la position non actionnée (21), interrompt une liaison hydraulique ou pneumatique entre le premier élément d'actionnement (11) et le dispositif de blocage (13).
